# EUROPEAN PATENT APPLICATION

(11) **EP 0 818 867 A1**
(43) Date of publication of application: **14.01.1998**
(21) Application number: 97202002.8
(22) Date of filing: 01.07.1997
(51) Int. Cl.: H02H 9/04

(54) **Circuit arrangement**

(30) Priority: 09.07.1996 BE 9600622
(71) Applicant: PHILIPS ELECTRONICS N.V., 5621 BA Eindhoven (NL)
(72) Inventor: Rapaille, Jean Rodolphe, 5656 AA Eindhoven (NL); van Beneden, Bruno, 5656 AA Eindhoven (NL)
(74) Representative: Evers, Johannes Hubertus Maria

(57) **Abstract**

The invention relates to a circuit arrangement for supplying a load, comprising
- input terminals (K1,K2) for connection to poles of a supply voltage source,
- a branch (V,DD; D,V,DD,D) interconnecting the input terminals and comprising a varistor (V).

According to the invention, this branch comprises a series arrangement of the varistor and a BOD. An effective suppression of transients is achieved thereby.

## Description

The invention relates to a circuit arrangement for supplying a load, comprising
- input terminals for connection to poles of a supply voltage source,
- a branch interconnecting the input terminals and comprising a varistor.

The invention also relates to a physical component Z in which a varistor and a BOD are integrated.

A circuit arrangement as mentioned in the opening paragraph is known from US 4,573,720. The known circuit arrangement is designed to be supplied by means of a low-frequency AC voltage such as, for example, mains voltage. Said branch in the known circuit arrangement is formed by a varistor which interconnects the two input terminals. If the supply voltage is delivered by a supply voltage source which delivers the same supply voltage to a (usually large) number of users, transients may arise owing to various causes. Transients are here understood to be voltage peaks of comparatively high amplitude (often of the order of 1000 V) which are superimposed on the supply voltage during a comparatively short time. The occurrence of such transients may damage the components from which the circuit arrangement is built up if the circuit arrangement is not provided with a transient suppressor. The transient suppressor in the known circuit arrangement is partly formed by the varistor. The varistor is so chosen that it passes only a negligible current in the case of normal values of the supply voltage amplitude. When a transient arises, however, the current through the varistor rises steeply. Since the current through the varistor rises steeply, the transient is strongly suppressed. A disadvantage of the known circuit arrangement is that the voltage between the input terminals (= the voltage across the varistor) accompanying the occurrence of a transient still rises to a value which is considerably higher than the maximum supply voltage amplitude. To compensate this, it is possible, for example, to add a comparatively large number of components to the transient suppressor, which renders the latter comparatively complicated and expensive. Alternatively, it is possible to dimension the components of the circuit arrangement such that they can withstand the voltage present between the input terminals in the case of a transient. This latter measure also renders the circuit arrangement expensive.

The invention has for its object to provide a circuit arrangement in which an efficient protection against transients and other pulsatory voltages is realized by means of comparatively few comparatively inexpensive components.

According to the invention, a circuit arrangement as described in the opening paragraph is for this purpose characterized in that said branch comprises a series arrangement of the varistor and a BOD.

The term "BOD" is understood to be a semiconductor element of the "Break Over Diode" type. If a transient arises superimposed on the supply voltage present between the input terminals of a circuit arrangement according to the invention, the voltage across the branch initially rises to a value at which the BOD breaks down. It is true that this voltage value across the branch is comparatively high, but it is achieved during a very short time interval only. After breakdown of the BOD, both the varistor and the BOD pass current and the voltage across the branch drops to a value which is substantially entirely determined by the varistor, because the voltage drop across the BOD in the conducting state is negligibly small. The choice of suitable values for the BOD and varistor renders it possible to achieve that the branch hardly passes any current at normal values of the supply voltage amplitude (i.e. the voltage across the branch at which the BOD breaks down is higher than the maximum amplitude of the supply voltage), whereas the voltage across the branch after breakdown of the BOD during a transient is lower than the voltage at which the BOD breaks down and only slightly higher than the maximum amplitude of the low-frequency AC voltage. As a result, the components of the circuit arrangement need not be dimensioned for a comparatively high amplitude of the voltage between the input terminals during transients but only for the amplitude of the voltage across the branch after breakdown of the BOD. A very efficient transient suppressor is thus realized by comparatively simple means in a circuit arrangement according to the invention.

It is noted here that it is also possible to construct the branch comprising the series arrangement of the varistor and the BOD in a circuit arrangement according to the invention such that this branch achieves that a pulsatory voltage generated in the circuit arrangement does not cause a transient in the supply voltage mains. A circuit arrangement comprising a series circuit of an inductive element and a capacitive element may, for example, generate pulsatory voltages during switching-off of the circuit arrangement. If the series circuit of an inductive element and a capacitive element is shunted by the series arrangement of the varistor and the BOD, however, a damping of the pulsatory voltages is achieved such that the occurrence of transients in the supply voltage mains is strongly suppressed.

Good results are achieved with a circuit arrangement according to the invention which is suitable for being supplied with a low-frequency AC voltage.

Since the transient suppressor in a circuit arrangement according to the invention is formed by very few components and nevertheless efficiently suppresses transients, it was found to be particularly advantageous to use a circuit arrangement according to the invention for supplying a lamp. Circuit arrangements for supplying a lamp are often necessarily of a very compact construction. This is true more in particular for compact low-pressure mercury discharge lamps in which the circuit arrangement for supplying the lamp is integrated with the lamp. It is advantageous for the same reason to construct the varistor and the BOD as one physical component Z.

An embodiment of a circuit arrangement according to the invention will be explained in more detail with reference to a drawing, in which:
Fig. 1 is a diagram of a first embodiment of a circuit arrangement according to the invention;
Fig. 2 is a diagram of a second embodiment of a circuit arrangement according to the invention; and
Fig. 3 shows the voltage amplitude gradient across a portion of the circuit arrangement shown in Fig. 2 during the occurrence of a transient.

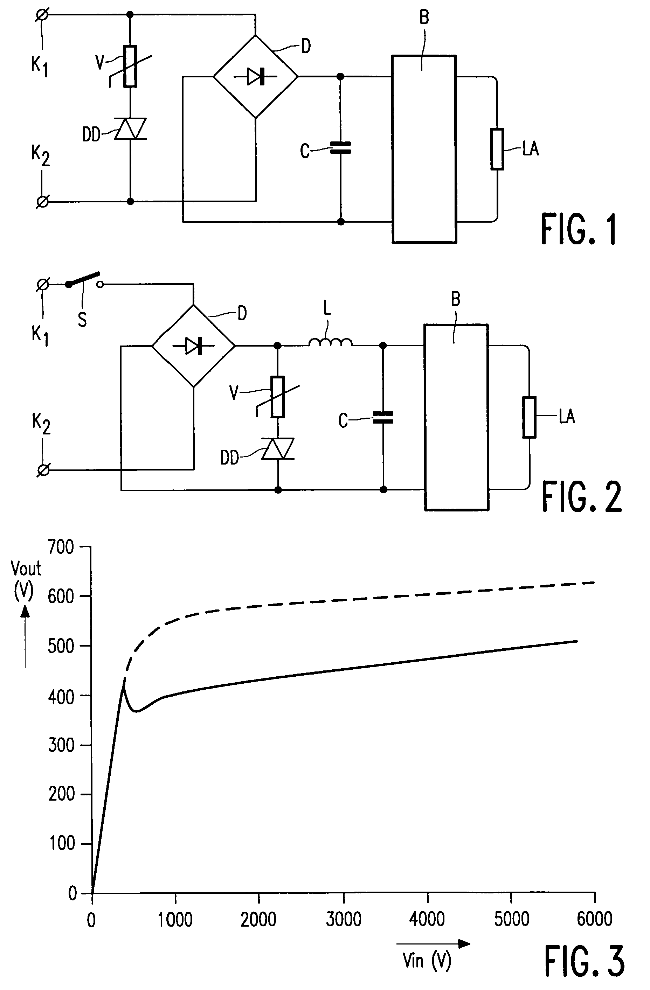

In Fig. 1, K1 and K2 are input terminals for connection to poles of a supply voltage source. The supply voltage source in the embodiment shown in Fig. 1 is formed by an AC voltage source supplying an AC voltage with a frequency of 50 Hz and a maximum amplitude of approximately 310 V. Input terminals K1 and K2 are interconnected by a branch formed by a series arrangement of a varistor V and a BOD DD. Input terminals K1 and K2 are also connected to respective inputs of diode bridge D. A first output of diode bridge D is connected to a first input of ballast circuit B for supplying a lamp. A second output of diode bridge D is connected to a second input of ballast circuit B. The first and second outputs of the diode bridge are also interconnected by a capacitor C. A lamp La is connected to output terminals of ballast circuit B.

The operation of the circuit arrangement shown in Fig. 1 is as follows.

When an AC voltage with a frequency of 50 Hz and an amplitude of approximately 310 V is present between input terminals K1 and K2, this voltage will be rectified by the diode bridge D. The rectified AC voltage charges capacitor C, so that a DC voltage is present across capacitor C during stationary operation. The ballast circuit B generates a lamp current through the lamp La from this DC voltage. If a transient is superimposed on the AC voltage present between the input terminals, the amplitude of the voltage across the branch formed by varistor V and BOD DD will rise at the beginning of the transient until the breakdown voltage of the BOD DD is reached. The voltage across capacitor C also rises as a result of this. Immediately after breakdown of the BOD DD, the voltage between the input terminals drops strongly to a value determined largely by the varistor V and only a little higher than the maximum amplitude of the AC voltage (unless the amplitude of the transient is exceptionally high). As a result, the voltage across the capacitor C drops. This means that the voltage across the capacitor C reaches a value higher than the value in the absence of transients during a very short time interval only at the beginning of the transient. The result of this is that during the occurrence of transients the components of ballast circuit B are not exposed to the high voltage which would be present across capacitor C if the circuit arrangement were without the branch comprising varistor V and BOD DD. The components from which the ballast circuit B is built up need accordingly be dimensioned only for the voltage across capacitor C after breakdown of the BOD DD.

In Fig. 2, components corresponding to components of the circuit arrangement shown in Fig. 1 are referenced in the same manner as in Fig. 1. The construction of the circuit arrangement shown in Fig. 2 is largely the same as that the circuit arrangement shown in Fig. 1. The differences are the following. A switching element S is present between input terminal K1 and the first input of diode bridge D for switching the supply voltage on and off. The series arrangement of varistor V and BOD DD here interconnects the outputs of diode bridge D instead of the inputs. In addition, a coil L is connected between the first output of the diode bridge D and the first input of ballast circuit B. This coil L serves to limit the amplitude of the current with which capacitor C is charged when the supply voltage is switched on by means of switching element S.

The operation of the circuit arrangement shown in Fig. 2 is as follows.

When the switching element S is conducting and an AC voltage with a frequency of 50 Hz and an amplitude of approximately 310 V is present between input terminals K1 and K2, this voltage will be rectified by the diode bridge D. The rectified AC voltage charges capacitor C, so that a DC voltage is present across capacitor C during stationary operation. The ballast circuit B generates a lamp current through the lamp La from this DC voltage. When the circuit is switched off in that the switching element S is rendered non-conducting, the coil L and the capacitor C cause a pulsatory voltage which is present between the outputs of the diode bridge. If the amplitude of this pulsatory voltage is so great that the BOD DD breaks down, the series arrangement of varistor V and BOD DD becomes conducting, which damps the pulsatory voltage to a considerable degree. This damping prevents to a considerable degree that the pulsatory voltage causes transients in the supply voltage mains to which the circuit arrangement is connected.

In Fig. 3, the voltage is plotted in volts (V) on the horizontal axis and the voltage in volts (V) also on the vertical axis. The curve indicated with a full line indicates the relation between the voltage (Vout) across the series arrangement of varistor V and BOD DD in the circuit arrangement shown in Fig. 2 and the amplitude of a pulsatory voltage (Vin) which would be present between the outputs of the diode bridge D when the switching element S is rendered non-conducting if these outputs were not interconnected by the series arrangement of varistor V and BOD DD. The varistor used was a type VDR 2322 593 51316 (Philips), and the BOD a type BR211-200 (Philips). This series arrangement conducts only a negligibly small quantity of current during stationary operation of the circuit arrangement. It is apparent that the voltage across the series arrangement of varistor V and BOD DD rises to approximately 425 V when the amplitude of Vin rises to approximately 425 V. The BOD DD breaks down at a higher value of the amplitude of Vin, and the amplitude of the voltage across the series arrangement of varistor V and BOD DD drops to approximately 370 V. It is also shown that a further increase in the amplitude of Vin causes the voltage Vout across the series arrangement of varistor V and BOD DD to rise slowly as well.

The broken line shows the relation between the voltage Vout between the outputs of the diode bridge D and the amplitude of Vin in the situation where a varistor is present between the outputs of the diode bridge instead of a series arrangement of a varistor and a BOD. This varistor is so dimensioned that it conducts only a negligibly small quantity of current for voltage values between the outputs of the diode bridge D which occur during stationary operation of the circuit arrangement. To comply with this requirement, it was found to be necessary to choose a varistor which conducts a current of 1 mA at a voltage of 390 V. In the series arrangement of varistor and BOD described above, where the varistor is of the VDR 2322 593 51316 type, it was found to be possible to comply with this requirement with a varistor which conducts a current of 1 mA at a voltage of 275 V. The broken line shows that the voltage between the outputs of the diode bridge D rises only slowly for values of the amplitude of Vin higher than approximately 550 V owing to the presence of the varistor between the outputs of the diode bridge D. It is apparent from Fig. 3, however, that the voltage between the outputs of the diode bridge D is considerably higher than in the situation where a series arrangement of a varistor and a BOD is present between the outputs of the diode bridge D. A branch comprising only a varistor damps the voltage between the outputs of the diode bridge much less well than does a series arrangement of a varistor and a BOD, and accordingly suppresses transients in the supply voltage mains to a much lesser degree.

## Claims

1. A circuit arrangement for supplying a load, comprising
- input terminals for connection to poles of a supply voltage source,
- a branch interconnecting the input terminals and comprising a varistor,
characterized in that said branch comprises a series arrangement of the varistor and a BOD.

2. A circuit arrangement as claimed in Claim 1, wherein the circuit arrangement comprises a series circuit comprising an inductive element and a capacitive element which are shunted by the series arrangement of the varistor and the BOD.

3. A circuit arrangement as claimed in Claim 1 or 2, wherein the circuit arrangement is suitable for being supplied with a low-frequency AC voltage.

4. A circuit arrangement as claimed in Claim 1, 2 or 3, wherein the circuit arrangement comprises connection terminals for accommodating a lamp.

5. A circuit arrangement as claimed in Claim 4, wherein the lamp is a compact low-pressure mercury discharge lamp.

6. A circuit arrangement as claimed in any one or several of the preceding Claims, wherein the varistor and the BOD are constructed so as to form one physical component Z.

7. A physical component Z in which a varistor and a BOD are integrated.
